# EUROPÄISCHE PATENTSCHRIFT

(11) **EP 2 445 790 B1**
(45) Veröffentlichungstag und Bekanntmachung des Hinweises auf die Patenterteilung: **11.12.2013**
(21) Anmeldenummer: 09776799.0
(22) Anmeldetag: 22.06.2009
(51) Int. Cl.: B64D 9/00

(54) **RIEGELELEMENT**
LOCKING ELEMENT
ELEMENT DE VERROUILLAGE

(43) Veröffentlichungstag der Anmeldung: 02.05.2012
(73) Patentinhaber: Telair International GmbH, 83714 Miesbach (DE)
(72) Erfinder: HUBER, Thomas, 83727 Schliersee (DE); HOLZNER, Richard, 83071 Stephanskirchen (DE)
(74) Vertreter: Bohnenberger, Johannes
(86) Internationale Anmeldenummer: PCT/EP2009/004485
(87) Internationale Veröffentlichungsnummer: WO 2010/149180

(56) Entgegenhaltungen:
- EP-A2- 0 771 726
- US-A- 4 349 168
- US-A- 4 372 715
- US-A- 4 401 286

## Beschreibung

Die Erfindung betrifft ein Riegelelement zum Sichern von Containern oder dergleichen Fracht in einem Frachtraum eines Flugzeugs.

Zum Transportieren von Luftfracht werden die zu transportierenden Frachtstücke, insbesondere Container oder Paletten, die nach bestimmten Normen gefertigt sind, innerhalb des Frachtraums mittels Riegelelementen am Boden des Frachtraums befestigt.

Im Bereich militärischer Frachten existiert eine besondere Norm, nach welcher die Container oder Paletten randseitige Einkerbungen in regelmäßigen Abständen aufweisen, in welche hakenförmige Riegelelemente zum Halten der Container in x-Richtung, also in Längsrichtung des Flugzeugs eingreifen. Diese Haken sind in der Ebene des Frachtraums, also der x-y-Ebene verschwenkbar ausgebildet.

Besonders kritisch werden derartige Riegelelemente dann, wenn die Fracht während eines Fluges über Fallschirme entladen werden soll. In diesem Fall müssen die Riegelelemente dann, wenn die heckseitige Ladeluke geöffnet und die Fracht über zuvor ausgestoßene Fallschirme aus dem Frachtraum herausgezogen werden soll, sicher geöffnet sein, da ansonsten ein Absturz insbesondere bei niedriger Flughöhe droht. Der Erfindung liegt die Aufgabe zu Grunde, ein Riegelelement der eingangs genannten Art dahin gehend aufzuzeigen, dass die Riegel sicher lösbar sind.

Dokument US4372715, das als nächstliegender Stand der Technik betrachtet wird, offenbart ein solches Riegelelement.

Diese Aufgabe wird durch ein Riegelelement nach Anspruch 1 gelöst.

Insbesondere wird diese Aufgabe durch ein Riegelelement zum Sichern von Containern oder dergleichen Fracht in einem Frachtraum eines Flugzeugs in dessen Längsrichtung gelöst, umfassend einen Rahmen, eine erste und eine zweite Riegelklaue, die an dem Rahmen von einer abgesenkten Ladeposition in eine hochgestellte Arbeitsposition zum Festhalten der Container um eine erste bzw. eine zweite Verschwenkachse verschwenkbar angebracht sind, wobei eine fernbetätigbare Einstellvorrichtung zum Ändern und Einstellen des Zustands der Riegelklauen vorgesehen ist, zwischen einem Ladezustand, in dem sich die Riegelklauen in der Ladeposition (retracted / released) befinden, einem Haltezustand (locked), in dem sich die Riegelklauen in der Arbeitsposition befinden und festgestellt sind und einem Auslösezustand (armed), in dem sich die Riegelklauen in der Arbeitsposition befinden, jedoch dann aus der Arbeitsposition in die Ladeposition verschwenkbar sind, wenn eine auf die Riegelklauen in Längsrichtung wirkende Kraft einen vorbestimmten Betrag übersteigt.

Ein wesentlicher Punkt der Erfindung liegt darin, dass neben den an sich üblichen Positionen ("Ladeposition" und "Arbeitsposition"), in welchen die Riegelklauen derart zurückgezogen sind, dass Container über die Riegel verschoben werden können (Ladeposition) bzw. die Riegel in die Ausnehmungen der Container greifen (Arbeitsposition), eine dritte Riegelposition vorgesehen ist. In dieser dritten Riegelposition sind die Container zwar noch gesichert, doch können sie bei Aufbringung einer hinreichend großen Kraft durch die Container selbst in die Ladeposition abgesenkt werden, so dass die Container nunmehr frei sind.

Auf diese Weise wird sichergestellt, dass die Fracht beim Öffnen der Fallschirme sicher aus dem Laderaum herausgezogen werden kann.

Weiterhin ist es möglich, die Riegelklauen vom Haltezustand (locked) direkt in die Ladeposition (retracted / released) zu bringen. Diese Funktion wird speziell dann verwendet, wenn Ladung in niedriger Höhe durch Anstellen der Flugzeugnase um ca. 4 Grad einfach auf Kommando hinten raus rollen soll (i.e. ohne jeglichen Fallschirm). Das ist die sogenannte Gravity Drop Methode.

Vorzugsweise ist dieser vorbestimmte Betrag der Kraft unterschiedlich, je nachdem, ob sie in die eine oder in die entgegengesetzte Richtung wirkt. Ein solches Riegelelement kann im Frachtraum derart montiert werden, dass Kräfte, die in Flugrichtung wirken, wie sie also beim Abbremsen eines Flugzeugs auftreten, die Riegelklauen praktisch nicht absenken, während Kräfte, die in der Entladerichtung wirken, die Riegelklauen zum Absenken bringen.

Die Riegelelemente können so ausgebildet sein, dass die Riegelklauen in der Ebene des Frachtraumbodens bewegbar sind, wie dies bisher üblich ist. Vorzugsweise ist das Riegelelement aber derart ausgebildet, dass es in einer hierzu senkrechten Ebene montierbar ist. Die Riegelklauen werden also in einer x-z-Ebene, also in einer Ebene, die senkrecht zum Frachtraumboden verläuft, verschwenkt.

Vorzugsweise weisen die beiden Riegelklauen jeweils eine Anschlagfläche auf, die mit Anschlagrändern von Ausnehmungen der Container in Anschlag bringbar sind, wenn die Container verriegelt sind. Die Riegelklauen sind hierbei derart bewegbar ausgebildet, dass sich beide Anschlagflächen beim Bewegen aus der Arbeitsposition in die Ladeposition von den Anschlagrändern entfernen. Dadurch wird sichergestellt, dass auch dann, wenn sich ein Container im Verlauf des Fluges bewegt hat und eng an einer (oder beiden) Anschlagflächen mit seinen Anschlagrändern anliegt, der Riegel geöffnet werden kann.

Die Anschlagflächen sind vorzugsweise derart an den verschwenkbaren Riegelklauen angebracht, dass sie in der Arbeitsposition parallel und fluchtend zueinander angeordnet sind. Dadurch wird ein optimales Halten der Container und gleichzeitig leichtes Lösen aus der Verriegelungsposition gewährleistet.

Zur Definition des vorbestimmten Betrages der Kraft, bei dessen Übersteigen die Riegelklauen von der Arbeitsposition in die Ladeposition verschwenkt werden, ist vorzugsweise eine Federeinrichtung vorgesehen. Dieses ist ein zuverlässiges und einfach herstellbares Mittel. Vorzugsweise wird bei dieser Anordnung eine insbesondere elek-tromotorisch verstellbare Spanneinrichtung vorgesehen, welche ein Einstellen der Vorspannung einer Haltefeder ermöglicht. Dadurch ist es möglich, jeden Riegel im Laderaum auf die Fracht einzustellen, die er halten und bei Übersteigen der vorbestim-mten Kraft freigeben soll. Es kann dadurch eine Fracht mit einem Gewicht von einer halben Tonne bei einer geringen, auf die Riegelklauen wirkenden Kraft freigegeben werden als eine Fracht mit einem Gewicht von 10 Tonnen.

Die Riegelklauen weisen vorzugsweise jeweils ein Bewegungsfederelement auf, welches die Riegelklauen aus der Arbeitsposition in die Ladeposition vorspannt. Dadurch kann ein sicheres Freigeben der Ladung bewerkstelligt werden.

Die beiden Riegelklauen sind vorzugsweise derart gegenläufig drehbar miteinander verbunden, dass beim Bewegen der einen Riegelklaue die andere Riegelklaue mitgenommen wird. Dies führt zu einer einfacheren Gesamtkonstruktion der Anordnung.

Vorzugsweise umfasst die Einstellvorrichtung einen Arretierungshebel, der von einer oberen Arretierungsposition zur Arretierung der Riegelklauen in eine untere Freigabeposition verschwenkbar ist, in der der Arretierungshebel die Riegelklauen freigibt. Ein solcher Hebelmechanismus ist einfach aufzubauen.

Die Einstellvorrichtung umfasst gattungsgemäß eine Nockenscheibe, die derart drehbar ist, dass sie in die folgenden drei Stellungen bewegt werden kann:
- eine Haltestellung zum Feststellen der Riegelklaue in der Arbeitsposition (locked),
- eine Auslösestellung zum Losstellen der Riegelklauen in der Arbeitsposition (armed) und
- eine Ladestellung zum Verschwenken der Riegelklauen in die Ladeposition (released).

Mit dieser Auslösestellung ist die dritte eingangs genannte Position bezeichnet, in welche die Riegelklauen sich zwar noch in der Arbeitsposition befinden, beim Auftreten der vorbestimmten Kraft jedoch abgesenkt werden können. Die Einstellung der Positionen mittels einer Nockenscheibe stellt hierbei ein zuverlässiges und erprobtes Getriebe dar.

Es wird auch ein Frachtraumboden beansprucht, an welchem Riegelelemente der beschriebenen Art montiert sind. Ein solcher Frachtraumboden ist besonders gut geeignet, um Fracht, z.B. militärisches Gut oder Hilfsgüter während des Fluges über eine Heckklappe zu entladen.

Weiterhin wird als zur Erfindung gehörig ein Verfahren zum Entladen von Containern oder dergleichen Fracht aus dem Frachtraum eines Flugzeugs betrachtet, wobei die Container oder dergleichen Fracht mit Riegelelementen der eingangs genannten Art gesichert sind, wobei das Verfahren folgende Schritte umfasst:
- Einstellen des Auslösezustands der Riegelklauen zum Sichern der Container,
- Belasten der Riegelklauen in Ausladerichtung mit einer Kraft, die den vorbestimmten Betrag übersteigt, zum Entsichern der Container und
- Bewegen der Container aus dem Frachtraum.

Diese Bewegung der Container geschieht vorzugsweise durch eine zuvor ausgeworfene Fallschirmvorrichtung.

Bevorzugte Ausführungsformen der Erfindung ergeben sich aus den Unteransprüchen.

Nachfolgend wird ein Ausführungsbeispiel der Erfindung anhand von Abbildungen näher erläutert. Hierbei zeigen
- Fig. 1 eine perspektivische Darstellung eines Riegelelementes gemäß einer Ausführungsform der Erfindung,
- Fig. 2 das Riegelelement nach Fig. 1 von der anderen Seite,
- Fig. 3 einen Teil-Längsschnitt durch das Riegelelement nach den Fig. 1
   und 2 und
- Fig. 4A - 4D eine Prinzipdarstellung des Riegelelementes in seinen verschiedenen Positionen.

In der nachfolgenden Beschreibung werden für gleiche und gleich wirkende Teile dieselben Bezugsziffern verwendet.

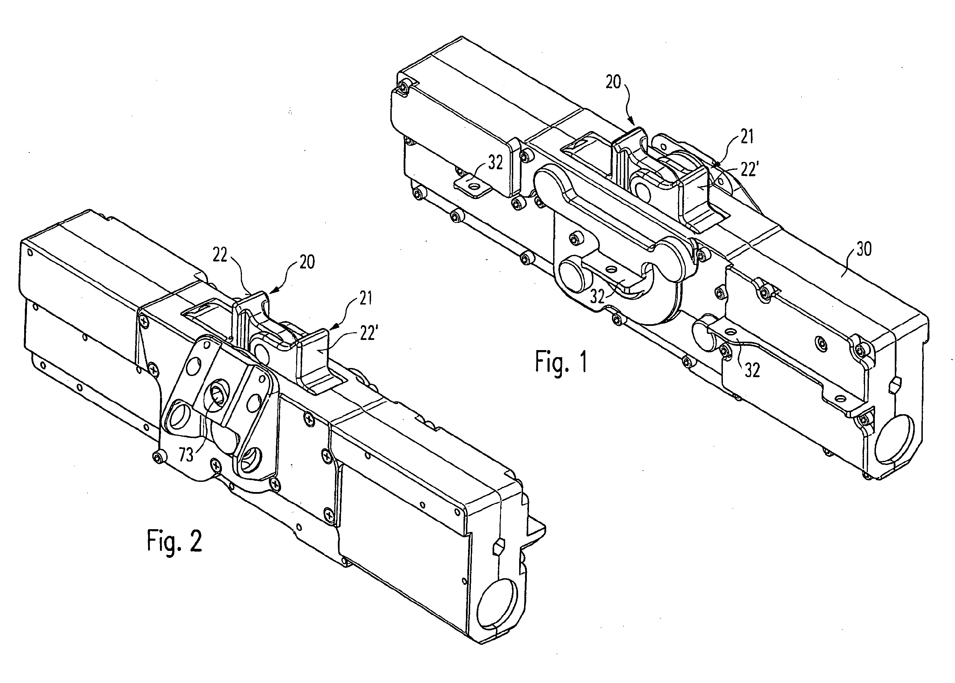

In den Fig. 1 und 2 ist eine Ausführungsform des erfindungsgemäßen Riegelelementes in perspektivischer Ansicht von zwei Seiten gezeigt. Aus diesen Abbildungen geht hervor, dass das Riegelelement einen Rahmen 30 aufweist, der aus zwei miteinander verbundenen Halbschalen besteht. Zum Befestigen des Rahmens 30 und damit des gesamten Riegelelementes an einem Frachtraumboden sind Befestigungslaschen 32 vorgesehen.

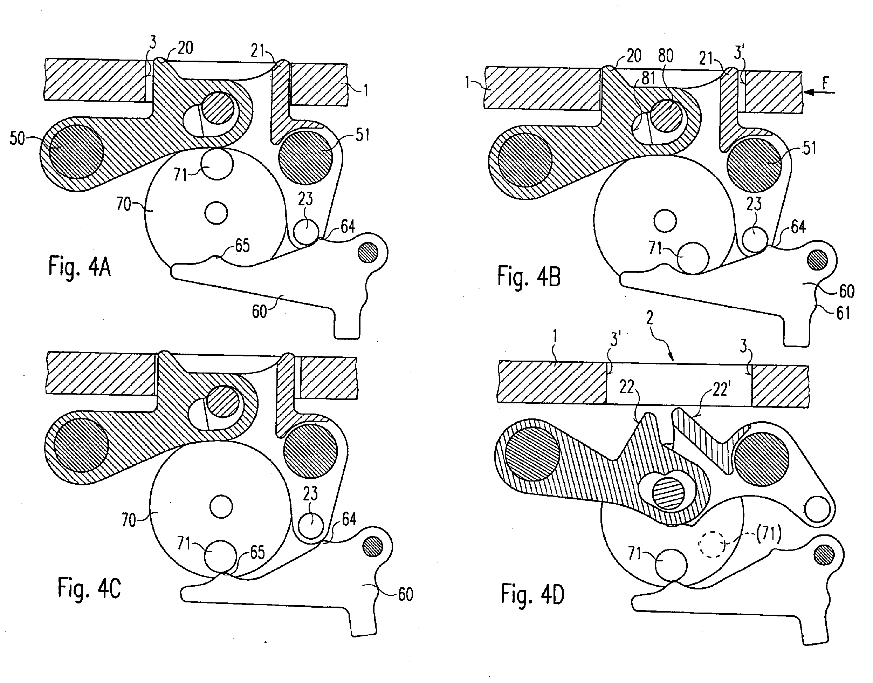

Im Rahmen 30 sind Riegelklauen 20, 21 verschwenkbar gelagert, wie dies noch weiter unten näher beschrieben wird. Diese Riegelklauen 20, 21 weisen jeweils Anschlagflächen 22, 22' auf, die mit Anschlagrändern 3, 3' (siehe Fig. 4A - D) einer Ausnehmung 2 eines Containers 1 in Anschlag kommen, wenn der Container verriegelt ist.

Zur mechanischen (hilfsweisen) Betätigung der Anordnung, also zum Absenken der Riegelklauen 20, 21 ist ein Betätigungselement 73 vorgesehen, das bei dem hier gezeigten Ausführungsbeispiel als Innensechskant ausgebildet ist.

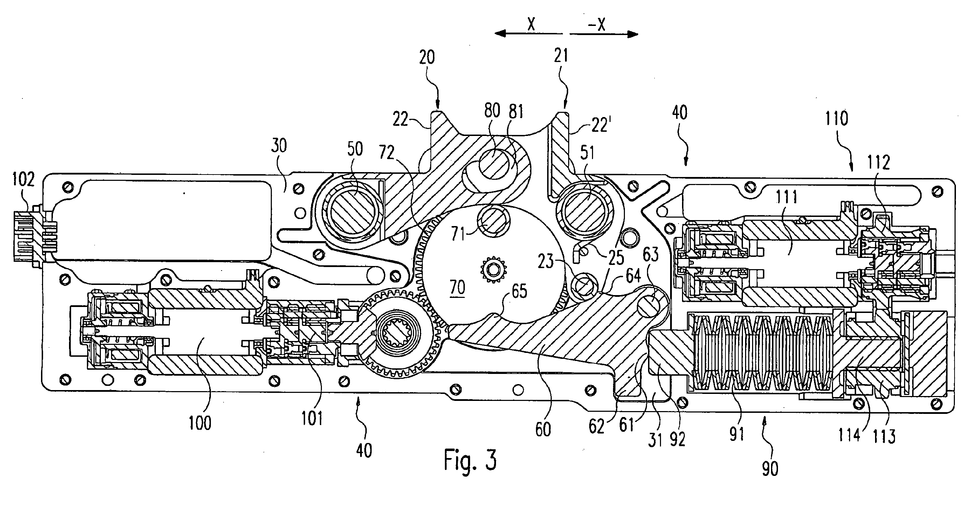

Wie in Fig. 3 gezeigt, sind die Riegelklauen 20, 21 auf Verschwenkachsen 50, 51 im Rahmen 30 schwenkbar gelagert. Es ist eine Feder 25 als Bewegungsfederelement vorgesehen, welche die Riegelklaue 21 in Fig. 3 entgegen dem Uhrzeigersinn beaufschlagt. Eine entsprechende Feder (nicht gezeichnet) ist zum Absenken der Riegelklaue 20 vorgesehen.

Die beiden Riegelklauen 20, 21 sind über einen Verbindungsstift 80 (an der Riegelklaue 21) und eine Ausnehmung als Verbindungskulisse 81 (an der anderen Riegelklaue 20) miteinander zur Übertragung einer Drehbewegung der Riegelklaue 21 auf die Riegelklaue 20 verbunden.

Weiterhin ist eine Nockenscheibe 70 drehbar im Rahmen 30 gelagert, die an ihrem Außenumfang einen Zahnkranz 72 aufweist, welcher über ein Getriebe 101 mit einem Elektromotor 100 drehfest verbunden ist. Die Nockenscheibe 70 kann über das erwähnte Betätigungselement 73 verdreht werden, wobei der Läufer des Elektromotors 100 mitgedreht wird.

Die Nockenscheibe 70 weist einen Einstellnocken 71 auf, dessen genauere Funktion weiter unten anhand von Fig. 4 erläutert wird.

Im Rahmen 30 ist weiterhin ein Arretierungshebel 60 verschwenkbar auf einem Hebellagerzapfen 63 gelagert. Der Arretierungshebel 60 weist eine Haltenase 64 und eine Entriegelungsnase 65 auf, deren Funktion weiter unten beschrieben wird.

Weiterhin ist am Arretierungshebel 60 eine Begrenzungsnase 62 vorgesehen, welche in einer Begrenzungsausnehmung 31 des Rahmens 30 derart eingreift, dass die Verschwenkbewegung des Arretierungshebels 60 begrenzt wird.

Weiterhin ist ein Auslösefederelement 90 vorgesehen, das eine Haltefeder 91 mit einem endseitigen Druckzapfen 92 aufweist, der auf einen Drucknoppen 61 des Arretierungshebels 60 drückt. Das Auslösefederelement 90 umfasst weiterhin eine Federeinstellvorrichtung 110, die einen Elektromotor 111 enthält, der über ein Getriebe 112 mit einer Spindelhülse 113 drehfest verbunden ist, welche drehbar aber linear arretiert im Rahmen 30 gelagert ist. Die Spindelhülse 113 sitzt auf einer Spindel 114, welche das den Druckzapfen 92 der Haltefeder 91 entgegengesetzte Lager dieser Haltefeder 91 bildet. Bei Bestromung des Spannelektromotors 111 wird die Spindelhülse 113 gedreht, so dass sich die Spindel 114 verschiebt und die Haltefeder 91 gespannt (bzw. entspannt) wird. Insgesamt wird also eine elektrische Einstellvorrichtung 40 gebildet, die einerseits die durch den Elektromotor 100 verdrehbare Nockenscheibe 70 mit den dazu gehörigen Betätigungselementen und andererseits die Federeinstellungsvorrichtung 110 umfasst.

Nachfolgend wird die Funktion der hier gezeigten Ausführungsform des Riegelelementes anhand der Fig. 4A - 4D erläutert, in welchen die zur Erzielung der verschiedenen Zustände der Riegelklauen notwendigen Elemente dargestellt sind.

In Fig. 4A ist der Haltezustand gezeigt, in welchem sich die Riegelklauen 20, 21 in der angehobenen Stellung befinden und in die Ausnehmung 2 eines Containers 1 derart eingreifen, dass die Anschlagflächen 22, 22' mit den Anschlagrändern 3, 3' der Ausnehmung 2 in Kontakt kommen können. In dieser Stellung unterstützt der Einstellnocken 71 untere Abschnitte der Riegelklauen 20, 21, so dass diese sich nicht um ihre Verschwenkachsen 50, 51 drehen können. In diesem Haltezustand sind also die Riegelklauen 20, 21 in der Arbeitsposition festgestellt.

Nach Betätigung des Elektromotors 100 (und Verdrehen der Nockenscheibe 70 im Uhrzeigersinn) bis zu der in Fig. 4B gezeigten Position fehlt also die direkte Unterstützung der Riegelklauen 20, 21 durch den Einstellnocken 71. In dieser Position, welche dem eingangs beschriebenen Auslösezustand entspricht, steht ein Haltezapfen 23, der mit der (in Fig. 4) rechten Riegelklaue 21 verbunden ist, mit der Haltenase 64 des Arretierungshebels 60 in Verbindung. Dadurch ist die Riegelklaue 21 in der hochgestellten Arbeitsposition festgehalten. Wenn nun eine Kraft F auf die Riegelklaue 21 wirkt und diese entgegen dem Uhrzeigersinn zu verdrehen versucht, übt der Haltezapfen 23 ein Drehmoment auf den Arretierungshebel 60 aus, die diese ebenfalls entgegen dem Uhrzeigersinn zu verdrehen sucht. Diesem Verdrehen des Arretierungshebels 60 wirkt das Auslösefederelement 90 entgegen, da der Druckzapfen 92 der Haltefeder 91 auf den Drucknoppen 61 des Arretierungshebels 60 drückt. Wird die Kraft F nun groß genug, so werden die vorgespannte Feder 91 zusammengedrückt und der Arretierungshebel 60 entgegen dem Uhrzeigersinn verdreht. Ist die Verdrehung hinreichend groß, so schnappt der Haltezapfen 23 über die Haltenase 64 und die Riegelklaue 21 wird durch die (in Fig. 3 gezeigte) Feder 25 nach unten geschwenkt. Bei dieser Schwenkbewegung bewegt sich der Verbindungsstift 80 ebenfalls nach unten (in einer kreisförmigen Bewegung um die Verschwenkachse 51) und nimmt dabei die andere Riegelklaue 20 durch Anschlag in der Verbindungskulisse 81 mit. Diese Position ist in Fig. 4D gezeigt, wobei die Position des Einstellnockens 71 mit einer unterbrochenen Linie gezeigt ist. Die Kraft F, bei welcher dieses "Hinunterfallen" der Riegelklauen 20, 21 passiert, kann also durch das Auslösefederelement 90 eingestellt werden.

Wird der Motor 100 weiter in Bewegung gesetzt, so dass sich die Nockenscheibe 70 weiter im Uhrzeigersinn dreht, so wird der Arretierungshebel 60 entgegen der Kraft des Auslösefederelementes 90 entgegen dem Uhrzeigersinn verschwenkt, wodurch der Haltezapfen 23 außer Eingriff mit Haltenase 64 gelangt (Fig. 4C). Dann verschwenkt die Feder 25 beide Riegelklauen 20, 21 ebenfalls, so dass dann die in Fig. 4D gezeigte Position erreicht wird, in welcher die Anschlagflächen 22, 22' außer Eingriff mit den Anschlagrändern 3, 3' sind.

Der Unterschied zwischen dem Übergang von Fig. 4B zu Fig. 4D und demjenigen von Fig. 4C zu Fig. 4D liegt also darin, dass im Auslösezustand, der in Fig. 4B gezeigt ist, eine Kraft F wirken muss, um den Arretierungshebel 60 zu verschwenken und den Haltezapfen 23 freizubekommen von der Haltenase 64, während das Verschwenken des Arretierungshebels 60 durch beim Übergang von Fig. 4C zu Fig. 4D durch den Elektromotor 100 geschieht und eben keine Kraft auf die Riegelklauen 20, 21 wirken muss.

Dann, wenn die Fracht nach der so genannten "Gravity Drop" Methode entladen werden soll, bei welcher die Nase des Flugzeugs um ca. 4° angestellt wird und die Fracht mit nur geringer Kraft bewegt wird, werden die Riegelklauen 20, 21 (mechanisch oder elektrisch) durch Drehen der Nockenscheibe 70 aus der in Fig. 4A gezeigten Position in die nächste Fig. 4D (und darüber hinaus) gebracht, also von der verriegelten Arbeitsposition (locked) in die Ladeposition (retracted / released).

Weiterhin ist durch den Aufbau des hier gezeigten Riegelelementes und seine Beschreibung verständlich geworden, dass nicht nur die in Fig. 4B gezeigte Kraft F, welche auf die rechte Riegelklaue 21 wirkt, den Arretierungshebel 60 verschwenken und die Klauen dadurch freigeben kann, sondern auch eine in der entgegengesetzten Richtung wirkende Kraft (-F), welche auf die Riegelklaue 20 wirkt. Durch die anderen geometrischen Verhältnisse und die Übertragung der Kräfte über den Verbindungsstift 80 und die Verbindungskulisse 81 ist aber sichergestellt, dass diese Kraft (-F) sehr viel größer sein muss als die auf die Riegelklaue 21 wirkende Kraft (F), um den Auslösezustand zu erreichen, in welchem die Riegelklauen 20, 21 abgesenkt werden.

Gemäß einer weiteren, hier nicht dargestellten Ausführungsform der Erfindung sind die geometrischen Verhältnisse (Hebelarme, Form der Verbindungskulisse) derart gewählt, dass die Riegelklaue 20 überhaupt nicht durch eine auf sie wirkende Kraft -F abgesenkt werden kann. Dies ist wichtig, um bei einem Crash auftretende extreme Belastungen aufzufangen.

Weiterhin ist aus Fig. 4 ersichtlich, dass die Anschlagflächen 22, 22' der Riegelklauen 20, 21 sich beim Absenken einander nähern, so dass ein Verklemmen in der Ausnehmung 22 des Containers 1 praktisch nicht möglich ist.

### Bezugszeichenliste

- 1: Container
- 2: Ausnehmung
- 3, 3': Anschlagrand
- 20: Riegelklaue
- 21: Riegelklaue
- 22, 22': Anschlagfläche
- 23: Haltezapfen
- 25: Bewegungsfederelement
- 30: Rahmen
- 31: Begrenzungsausnehmung
- 32: Befestigungslasche
- 40: elektrische Einstellvorrichtung
- 50: Verschwenkachse
- 51: Verschwenkachse
- 60: Arretierungshebel
- 61: Drucknoppen
- 62: Begrenzungsnase
- 63: Hebellagerzapfen
- 64: Haltenase
- 65: Entriegelungsnase
- 70: Nockenscheibe
- 71: Einstellnocken
- 72: Zahnkranz
- 73: Betätigungselement
- 80: Verbindungsstift
- 81: Verbindungskulisse
- 90: Auslösefederelement
- 91: Haltefeder
- 92: Druckzapfen
- 100: Motor
- 101: Getriebe
- 102: Steckkontakt
- 110: Federeinstellvorrichtung
- 111: Spannelektromotor
- 112: Getriebe
- 113: Spindelhülse
- 114: Spindel

## Patentansprüche

1. Riegelelement zum Sichern von Containern oder dergleichen Fracht in einem Fachtraum eines Flugzeugs, insbesondere in dessen Längsrichtung (x), umfassend
einen Rahmen (30), eine erste und eine zweite Riegelklaue (20, 21), die an dem Rahmen (30) von einer abgesenkten Ladeposition in eine hochgestellte Arbeitsposition zum Festhalten von Containern um eine erste bzw. zweite Verschwenkachse (50, 51) verschwenkbar angebracht sind, wobei eine fernbetätigbare Einstellvorrichtung (40) vorgesehen ist, zum Ändern und Einstellen des Zustands der Riegelklauen (20, 21) zwischen
- einem Ladezustand, in dem sich die Riegelklauen (20, 21) in der Ladeposition befinden,
- einem Haltezustand, in dem sich die Riegelklauen (20, 21) in der Arbeitsposition befinden und festgestellt sind, und
- einem Auslösezustand, in dem sich die Riegelklauen (20, 21) in der Arbeitsposition befinden, jedoch dann aus der Arbeitsposition in die Ladeposition verschwenkbar sind, wenn eine auf die Riegelklauen (20, 21) in Längsrichtung (x) wirkende Kraft (F) einen vorbestimmten Betrag übersteigt,
**dadurch gekennzeichnet, dass**
die Einstellvorrichtung (40) eine Nockenscheibe (70) umfasst, die derart drehbar ist, dass die Nockenscheibe (70) in folgende drei Stellungen bewegt werden kann:
- eine Haltestellung zum Feststellen der Riegelklauen (20, 21) in der Arbeitsposition,
- eine Auslösestellung zum Losstellen der Riegelklauen (20, 21) in der Arbeitsposition und
- eine Ladestellung zum Verschwenken der Riegelklauen (20, 21) in die Ladeposition.

2. Riegelelement nach Anspruch 1,
**dadurch gekennzeichnet, dass**
das Riegelelement derart ausgebildet ist, dass die vorbestimmte Kraft (F) unterschiedlich ist, je nachdem ob sie in eine erste bestimmte Richtung (x) oder in eine zweite, dazu entgegengesetzte Richtung (-x) wirkt oder ein Verschwenken der Riegelklauen (20, 21) in die Ladeposition durch eine in die zweite Richtung wirkende Kraft (-F) vollständig verhindert wird.

3. Riegelelement nach einem der vorhergehenden Ansprüche,
**dadurch gekennzeichnet, dass**
Riegelklauen (20, 21) jeweils eine Anschlagfläche (22,22') aufweisen, die mit Anschlagrändern (3, 3') von Ausnehmungen (2) eines Containers (1) in Anschlag bringbar sind und dass die Riegelklauen (20, 21) derart bewegbar ausgebildet sind, dass sich beide Anschlagflächen (22,22') beim Bewegen aus der Arbeitsposition in die Ladeposition von den Anschlagrändern (3, 3') entfernen.

4. Riegelelement nach Anspruch 3,
**dadurch gekennzeichnet, dass** die Anschlagflächen (22, 22') in der Arbeitsposition parallel und fluchtend zueinander angeordnet sind.

5. Riegelelement nach einem der vorhergehenden Ansprüche,
**dadurch gekennzeichnet, dass**
die Einstellvorrichtung (40) eine Federeinrichtung (90) umfasst, welche den vorbestimmten Betrag der in Längsrichtung (x) wirkenden Kraft (F) definiert.

6. Riegelelement nach Anspruch 5,
**dadurch gekennzeichnet, dass**
die Federeinrichtung (90) eine insbesondere elektromotorisch verstellbare Spanneinrichtung (110-114) umfasst zum Einstellen einer Vorspannung einer Haltefeder (91).

7. Riegelelement nach einem der vorhergehenden Ansprüche,
**dadurch gekennzeichnet, dass**
ein Bewegungsfederelement (25) zum Verschwenken der Riegelklauen (20, 21) aus der Arbeitsposition in die Ladeposition vorgesehen ist.

8. Riegelelement nach einem der vorhergehenden Ansprüche,
**dadurch gekennzeichnet, dass**
die Riegelklauen (20, 21) derart gegenläufig drehbar miteinander verbunden sind, dass beim Bewegen der einen Riegelklaue (21) die andere Riegelklaue (20) mitgenommen wird.

9. Riegelelement nach einem der vorhergehenden Ansprüche,
**dadurch gekennzeichnet, dass**
die Einstellvorrichtung (40) einen Arretierungshebel (60) umfasst, der von einer oberen Arretierungsposition zur Arretierung der Riegelklauen (20, 21) in eine untere Freigabeposition, verschwenkbar ist, in welcher der Arretierungshebel (60) die Riegelklauen (20, 21) freigibt.

10. Riegelelement nach einem der vorhergehenden Ansprüche,
**dadurch gekennzeichnet, dass**
die Einstellvorrichtung einen Elektromotor (100) umfasst.

11. Frachtraumboden eines Flugzeugs, wobei der Frachtraum Riegelelemente nach einem der vorhergehenden Ansprüche umfasst.

12. Verfahren zum Entladen von Containern oder dergleichen Fracht aus dem Frachtraum eines Flugzeugs, wobei die Container oder dergleichen Fracht mit Riegelelementen nach einem der Ansprüche 1 bis 10 gesichert sind, folgende Schritte umfassend:
- Auslösen des Auslösezustands der Riegelklauen zum Sichern der Container;
- Belasten der Riegelklauen (20, 21) in einer Ausladerichtung (x) mit einer Kraft (F), die den vorher bestimmten Betrag übersteigt, zum Entsichern der Container, und
- Bewegen der entsicherten Container aus dem Frachtraum.

## Claims

1. Locking element for securing containers or similar cargo in a cargo hold of an aircraft, especially in the longitudinal direction (x) thereof, comprising
a frame (30), a first locking jaw and a second locking jaw (20, 21) which are mounted on the frame (30) so as to be pivotable about a first and a second pivot shaft (50, 51), respectively, from a lowered loading position to a raised working position for holding containers in place, there being provided a remotely operable adjusting device (40) for changing and adjusting the state of the locking jaws (20, 21) between
- a loading state, in which the locking jaws (20, 21) are located in the loading position,
- a holding state, in which the locking jaws (20, 21) are located and fixed in the working position, and
- an armed state, in which the locking jaws (20, 21) are located in the working position but are pivotable out of the working position into the loading position when a force (F) acting on the locking jaws (20, 21) in the longitudinal direction (x) exceeds a predetermined amount,
**characterised in that**
the adjusting device (40) comprises a cam disc (70) which is rotatable in such a way that the cam disc (70) can be moved into the following three positions:
- a holding position for fixing the locking jaws (20, 21) in the working position,
- an armed position for freeing the locking jaws (20, 21) in the working position, and
- a loading position for pivoting the locking jaws (20, 21) into the loading position.

2. Locking element according to claim 1,
**characterised in that**
the locking element is constructed in such a way that the predetermined force (F) differs in dependence upon whether it acts in a first specific direction (x) or in a second direction (-x) opposite thereto or pivoting of the locking jaws (20, 21) into the loading position is entirely prevented by a force (-F) acting in the second direction.

3. Locking element according to either one of the preceding claims,
**characterised in that**
locking jaws (20, 21) each have a stop face (22, 22') arranged to be brought into contact with stop edges (3, 3') of recesses (2) of a container (1), and the locking jaws (20, 21) are arranged to be movable in such a way that on movement from the working position to the loading position both stop faces (22, 22') move away from the stop edges (3, 3').

4. Locking element according to claim 3,
**characterised in that**
in the working position the stop faces (22, 22') are arranged in parallel and in alignment with one another.

5. Locking element according to any one of the preceding claims,
**characterised in that**
the adjusting device (40) comprises a spring device (90) which defines the predetermined amount of the force (F) acting in the longitudinal direction (x).

6. Locking element according to claim 5,
**characterised in that**
the spring device (90) comprises a tensioning device (110-114) which is adjustable, especially by means of an electric motor, to adjust the bias of a holding spring (91).

7. Locking element according to any one of the preceding claims,
**characterised in that**
a movement spring element (25) is provided for pivoting the locking jaws (20, 21) from the working position to the loading position.

8. Locking element according to any one of the preceding claims,
**characterised in that**
the locking jaws (20, 21) are connected to one another so as to be rotatable in opposite directions in such a way that on movement of one locking jaw (21) the other locking jaw (20) is caused to move therewith.

9. Locking element according to any one of the preceding claims,
**characterised in that**
the adjusting device (40) comprises a detent lever (60) which is pivotable from an upper detent position for retaining the locking jaws (20, 21) to a lower release position in which the detent lever (60) releases the locking jaws (20, 21).

10. Locking element according to any one of the preceding claims,
**characterised in that**
the adjusting device comprises an electric motor (100).

11. Cargo hold floor of an aircraft, the cargo hold comprising locking elements in accordance with any one of the preceding claims.

12. Method of unloading containers or similar cargo from the cargo hold of an aircraft, the containers or similar cargo being secured with locking elements according to any one of claims 1 to 10, comprising the following steps:
- activating the armed state of the locking jaws for securing the containers;
- applying a load to the locking jaws (20, 21) in an unloading direction (x) with a force (F) that exceeds the previously determined amount, to release the containers, and
- moving the released containers out of the cargo hold.

## Revendications

1. Elément de verrouillage destiné à fixer des conteneurs ou du fret analogue dans une soute d'un avion, en particulier dans sa direction longitudinale (x), comprenant
un cadre (30), une première et une deuxième griffes de verrouillage (20, 21), qui sont montées sur le cadre (30) d'une façon pivotante autour d'un premier ou d'un deuxième axe de pivotement (50, 51) d'une position de chargement abaissée à une position de travail relevée pour la fixation de conteneurs, dans lequel il est prévu un dispositif de réglage télécommandable (40) pour modifier et régler l'état des griffes de verrouillage (20, 21) entre
- un état de chargement, dans lequel les griffes de verrouillage (20, 21) se trouvent dans la position de chargement,
- un état de maintien, dans lequel les griffes de verrouillage (20, 21) se trouvent et sont bloquées dans la position de travail, et
- un état de déblocage, dans lequel les griffes de verrouillage (20, 21) se trouvent dans la position de travail, mais peuvent pivoter de la position de travail à la position de chargement lorsqu'une force (F) agissant sur les griffes de verrouillage (20, 21) dans la direction longitudinale (x) dépasse une valeur prédéterminée,
**caractérisé en ce que** le dispositif de réglage (40) comprend un disque de came (70), qui peut tourner de telle manière que le disque de came (70) puisse être déplacé dans les trois positions suivantes:
- une position de maintien pour le blocage des griffes de verrouillage (20, 21) dans la position de travail,
- une position de déblocage pour le déblocage des griffes de verrouillage (20, 21) dans la position de travail, et
- une position de chargement pour faire pivoter les griffes de verrouillage (20, 21) dans la position de chargement.

2. Elément de verrouillage selon la revendication 1, **caractérisé en ce que** l'élément de verrouillage est réalisé de telle manière que la force prédéterminée (F) soit différente, selon qu'elle agit dans une première direction déterminée (x) ou dans une deuxième direction (-x) opposée à celle-ci, ou qu'un pivotement des griffes de verrouillage (20, 21) dans la position de chargement soit totalement empêché par une force (-F) agissant dans la deuxième direction.

3. Elément de verrouillage selon l'une quelconque des revendications précédentes, **caractérisé en ce que** les griffes de verrouillage (20, 21) présentent des faces de butée respectives (22, 22'), qui peuvent être amenées à butée contre des bords de butée (3, 3') d'évidements (2) d'un conteneur (1) et **en ce que** les griffes de verrouillage (20, 21) sont mobiles d'une manière telle que les deux faces de butée (22, 22') s'écartent des bords de butée (3, 3') lors du mouvement de la position de travail à la position de chargement.

4. Elément de verrouillage selon la revendication 3, **caractérisé en ce que** les faces de butée (22, 22') sont disposées parallèlement et en alignement l'une avec l'autre dans la position de travail.

5. Elément de verrouillage selon l'une quelconque des revendications précédentes, **caractérisé en ce que** le dispositif de réglage (40) comprend un système de ressort (90), qui définit la valeur prédéterminée de la force (F) agissant dans la direction longitudinale (x).

6. Elément de verrouillage selon la revendication 5, **caractérisé en ce que** le système de ressort (90) comprend un dispositif de tension (110-114) réglable notamment par moteur électrique pour le réglage d'une précontrainte d'un ressort de retenue (91).

7. Elément de verrouillage selon l'une quelconque des revendications précédentes, **caractérisé en ce qu'**il est prévu un élément de ressort de mouvement (25) pour faire pivoter les griffes de verrouillage (20, 21) de la position de travail à la position de chargement.

8. Elément de verrouillage selon l'une quelconque des revendications précédentes, **caractérisé en ce que** les griffes de verrouillage (20, 21) sont reliées l'une à l'autre en mouvement de rotation de sens contraire, de telle manière que, lors du mouvement d'une première griffe de verrouillage (21), l'autre griffe de verrouillage (20) soit entraînée avec elle.

9. Elément de verrouillage selon l'une quelconque des revendications précédentes, **caractérisé en ce que** le dispositif de réglage (40) comprend un levier d'arrêt (60), qui peut pivoter d'une position supérieure d'arrêt pour l'arrêt des griffes de verrouillage (20, 21) à une position inférieure de libération, dans laquelle le levier d'arrêt (60) libère les griffes de verrouillage (20, 21).

10. Elément de verrouillage selon l'une quelconque des revendications précédentes, **caractérisé en ce que** le dispositif de réglage comprend un moteur électrique (100).

11. Plancher de soute d'un avion, dans lequel la soute comprend des éléments de verrouillage selon l'une quelconque des revendications précédentes.

12. Procédé pour décharger des conteneurs ou du fret analogue hors de la soute d'un avion, dans lequel les conteneurs ou le fret analogue sont fixés avec des éléments de verrouillage selon l'une quelconque des revendications 1 à 10, comprenant les étapes suivantes:
- activer l'état de déblocage des griffes de verrouillage destinées à fixer les conteneurs;
- actionner les griffes de verrouillage (20, 21) dans une direction de déchargement (x) avec une force (F), qui dépasse la valeur déterminée antérieurement, pour détacher les conteneurs; et
- déplacer les conteneurs détachés hors de la soute.
